# EUROPÄISCHE PATENTSCHRIFT

(11) **EP 1 426 243 B1**
(45) Veröffentlichungstag und Bekanntmachung des Hinweises auf die Patenterteilung: **30.11.2005**
(21) Anmeldenummer: 03020220.4
(22) Anmeldetag: 06.09.2003
(51) Int. Cl.: B60R 21/01, B60N 2/00, B60N 2/07, G01G 19/414

(54) **Sitzkonsole für einen Fahrzeugsitz**
Seat foundation for a vehicle seat
Soubassement de siège pour un siège de véhicule

(30) Priorität: 05.12.2002 DE 10256741
(43) Veröffentlichungstag der Anmeldung: 09.06.2004
(73) Patentinhaber: Dr.Ing. h.c.F. Porsche Aktiengesellschaft, 70435 Stuttgart (DE)
(72) Erfinder: Mehrkens, Michael, 75203 Königsbach-Stein (DE); Walter, Siegfried, 71229 Leonberg (DE); Meier, Steffen, 74392 Freudental (DE)

(56) Entgegenhaltungen:
- US-A1- 2002 062 699
- US-B1- 6 224 094
- US-B1- 6 282 473
- US-B1- 6 419 315

## Beschreibung

Die Erfindung bezieht sich auf eine Sitzkonsole für ein Fahrzeugsitz nach dem Oberbegriff des Anspruchs 1.

Aus der DE 698 02 109 T 2 ist ein System zum Bestimmen des Gewichts eines Fahrzeuginsassen bekannt, bei dem zwischen einer Sitzschiene und einem Sitzrahmen Gewichtssensoren angeordnet sind. Aus der DE 100 60 649 A1 ist die Anordnung von vorderen und hinteren Gewichtssensoren in Fahrzeugsitzen bekannt. Aus der gattungsbildenden US 2002/0062699 A1 ist zwischen einem Fahrzeugsitz bzw. einer Sitzschiene und einer Abstützung eine Messvorrichtung zum Erfassen eines Gewichts einer sitzenden Person vorgesehen. Die Messvorrichtung umfasst ein Messglied, welches in der Abstützung um eine Achse schwenkbar zwischen der Sitzschiene und der Abstützung vorgesehen ist.

Die Aufgabe der Erfindung besteht darin, eine Sitzkonsole für einen Fahrzeugsitz zu schaffen, welche einfach zu montieren ist, eine Abkapselung der Gewichtssensoren aufweist und eine störungsfreie Gewichtsmessung eines Fahrzeuginsassen gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass die Sitzkonsole im wesentlichen bestehend aus einem Oberrahmen und einem Unterrahmen verwindungssteif mit zwischenliegenden Sensoren ausgeführt ist. Hierzu umfasst die Sitzkonsole einen feststehenden Unterrahmen mit einem unter Zwischenschaltung von Gewichtssensoren schwimmend gelagerten Oberrahmen. Die Gewichtssensoren sind über Verbindungselemente einerseits ortsfest mit dem Oberrahmen und andererseits über einen in den jeweiligen Sensor integrierten Bolzen am Unterrahmen befestigt.

Insbesondere ist der Ober- und Unterrahmen im Querschnitt jeweils U-profilförmig ausgebildet, wobei der Oberrahmen in den Unterrahmen eintaucht und die Sensoren jeweils von den seitlichen Profilschenkeln des Ober- und Unterrahmens umgeben sind. Der Ober- und Unterrahmen ist im Querschnitt jeweils U-profilförmig ausgebildet, wobei der Oberrahmen mit seinen Schenkeln die Schenkel des Unterrahmens von außen schwimmend übergreift. Durch diese U-profilförmige Ausbildung der beiden Rahmen der Sitzkonsole können die zwischenliegenden Gewichtssensoren ein störungsfreies Signal abgeben, welches über eine elektrische Steuerung analysiert wird.

Damit das Signal eindeutig das Gewicht des Sitzbenutzers feststellt, ist desweiteren nach der Erfindung vorgesehen, daß der Unter- und Oberrahmen eine U-Profilform aufweist, die an ihren freien Enden der Schenkel jeweils einen Sensor aufweist und die weiteren Sensoren im Übergangsbereich der Schenkel der U-Profilform zum Quersteg angeordnet sind. Durch diese Anordnung der Sensoren ist das auf einen Fahrzeugsitz aufgebrachte Gesamtgewicht optimal zu bestimmen. Nach einer weiteren Ausführung kann der Unter- und Oberrahmen auch eine geschlossene U-Profilform aufweisen, das heißt, die Schenkel sind am freien Ende jeweils mit einem Quersteg verbunden.

Zur Erzielung einer parallelen Anordnung des Oberrahmens zum Unterrahmen sind zwischen den Sensoren und dem Oberrahmen sogenannte Distanzstücke angeordnet, welche evtl. Ungleichheiten beheben sollen. Diese Distanzstücke sind beispielsweise in unterschiedlicher Dicke den jeweiligen Gegebenheiten angepaßt, ausgeführt, so daß in jedem Fall keine Verfälschung des über die vier Sensoren ermittelten Gesamtgewichts des Insassen erfolgen kann.

Nach der Erfindung ist ferner vorgesehen, daß die im Schenkel angeordneten Sensoren am Oberrahmen über zwei Gewindebolzen in einer oberseitig des Oberrahmens angeordneten Gewindeplatte verschraubbar sind. Durch diese Verbindung der Sensoren mit dem Oberrahmen kann eine einfache Vormontage der Sensoren erfolgen und es wird ein fester Sitz an diesen Oberrahmen erzielt.

Die weiteren im Übergangsbereich angeordneten Sensoren sind beispielsweise mittels Gewindebolzen in im Oberrahmen ortsfest gehaltenen Muttern befestigbar. Diese Muttern bedingen durch die Festlegung in der Wandung des Oberrahmens einen gegenüber einer aufgesetzten Gewindeplatte geringere Bauhöhe.

Durch die Ausbildung der Sitzkonsole mit sich gegenseitig abschließenden Profilen können Gegenstände im Fahrzeug den Meßweg der Gewichtssensoren weder blockieren noch die schwimmende Lagerung des Oberrahmens zum Unterrahmen behindern. Außerdem wird die Sensorik geschützt. Durch die direkten Anschraubpunkte der Sensoren am Rahmen der Sitzkonsole werden Meßfehler minimiert. Die U-Form des Ober- und Unterrahmens ist vorteilig, da eine Beinfreiheit im Fondbereich des Fahrzeugs beibehalten werden kann.

Ein Ausführungsbeispiel der Erfindung ist in den Zeichnungen dargestellt und wird im folgenden näher beschrieben.
Es zeigen
- Fig. 1: eine schaubildliche Darstellung der Sitzkonsole in einer Explosivdarstellung der Rahmen und Sensoren und Befestigungselemente,
- Fig. 2: einen Vertikalschnitt durch die Schenkel des Ober- und Unterrahmens im zusammengebauten Zustand,
- Fig. 3: einen Querschnitt durch die U-Profile des Ober- und Unterrahmens,
- Fig. 4: einen Vertikalschnitt der Einzelheit X durch den in Bezug auf die Fahrtrichtung F hintenliegenden Sensor zwischen den Rahmenschenkeln und
- Fig. 5: einen Vertikalschnitt der Einzelheit Z durch den in Bezug auf die Fahrtrichtung vornliegenden Sensor im Übergangsbereich vom Schenkel zum Quersteg der Rahmen.

Eine Sitzkonsole 1 für ein Fahrzeug umfaßt im wesentlichen einen mit dem Fahrzeug festverbundenen Unterrahmen 2 und einem Oberrahmen 3. Zwischen dem Unter- und Oberrahmen 2, 3 sind mehrere Gewichtssensoren 4 bis 7 angeordnet. Diese sind fest mit dem Oberrahmen 3 verbunden und am Unterrahmen 2 gehalten.

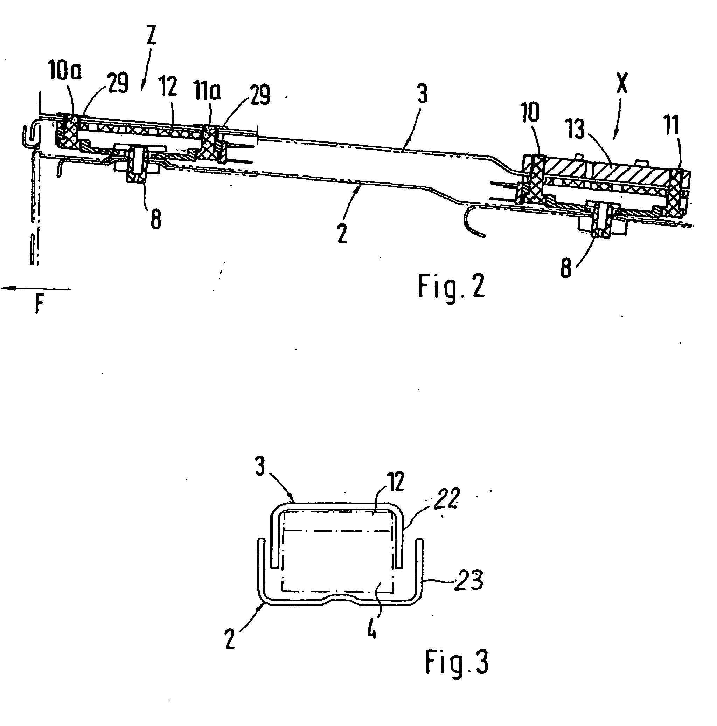

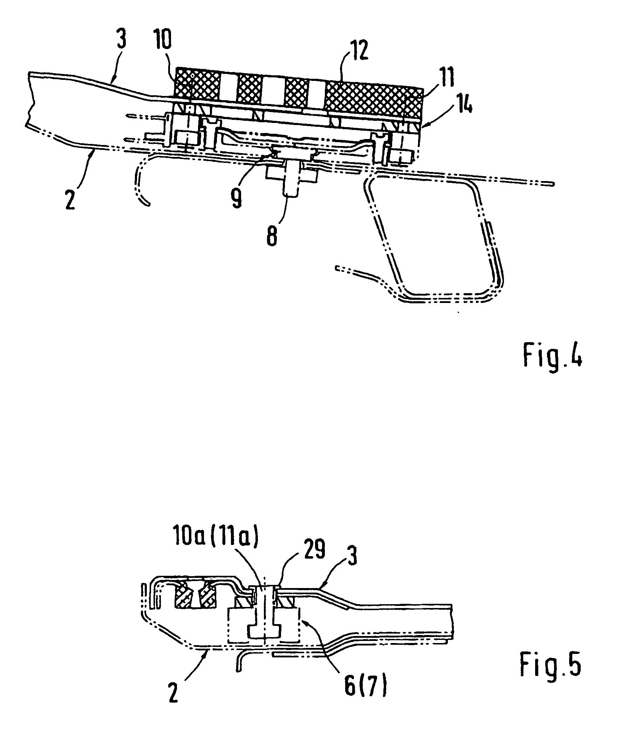

Zur Gewichtsermittlung eines auf dem Fahrzeugsitz sitzenden Insassen ist der Oberrahmen 3 schwimmend auf dem Unterrahmen 2 unter Zwischenschaltung der Gewichtssensoren 4 bis 7 angeordnet. Hierzu sind die Sensoren 4 bis 7 über einem Bolzen 8 am Unterrahmen 2 abgestützt, der mit seinem Kopf 9 auf ein Meßelement im Sensor einwirkt. Über zwei beabstandete Gewindebolzen 10, 11 bzw. 10a, 11a sind die Sensoren 4 bis 7 mittels einer Gewindeplatte 12, 13 am Oberrahmen 3 festgesetzt, was in Fig. 2 und in den Einzelheiten X und Z der Fig. 4 und 5 näher dargestellt ist. Damit ein Ausgleich für eine parallele Anordnung des Oberrahmens 3 zum Unterrahmen 2 möglich wird, können zwischen den Sensoren 4 bis 7 sogenannte Distanzstücke 14, 15 unterschiedliche Dicke angeordnet sein.

Der Unterrahmen 2 sowie der Oberrahmen 3 bestehen im Querschnitt aus einem U-Profil, wie Fig. 3 näher zeigt und die seitlichen Profilschenkel 22, 23 der beiden Rahmen 2 und 3 überdecken sich, wobei die Schenkel 22 des Oberrahmens 3 sich gering beabstandet innerhalb der Schenkel 23 des Unterrahmens 2 befinden. Nach einer weiteren Ausführung können die Schenkel 22 auch die Schenkel 23 von außen übergreifen.

Der Ober- und Unterrahmen 3, 2 bilden eine U-Form, wobei ein Quersteg 20, 21 in Bezug auf die Fahrtrichtung F vorne liegt und die anschließenden Schenkel 22, 23 des Rahmens 2, 3 sich von diesem Quersteg aus nach hinten entgegen der Fahrtrichtung F erstrecken. Die Gewichtssensoren 4, 5 sind an den freien Enden 24, 25 zwischen den Schenkeln 22, 23 der U-Form der Rahmen 3, 2 angeordnet. Die weiteren Gewichtssensoren 6, 7 sind im Übergangsbereich 26, 27 zwischen den Rahmen 2 und 3 vorgesehen.

Die Befestigung der Sensoren 4, 5 erfolgt am Oberrahmen 3 über die Schrauben 10, 11 bzw. 10a, 11a, welche mit der Gewindeplatte 12 verschraubt sind. Die weiteren Sensoren 6, 7 sind entweder über eine Gewindeplatte 13 oder aber über in den Rahmen 3 eingesetzte Muttern 29 gehalten. Im Ausführungsbeispiel ist der Sensor 6 über eine Gewindeplatte 13 und der Sensor 7 über Gewindemuttern 29 gehalten.

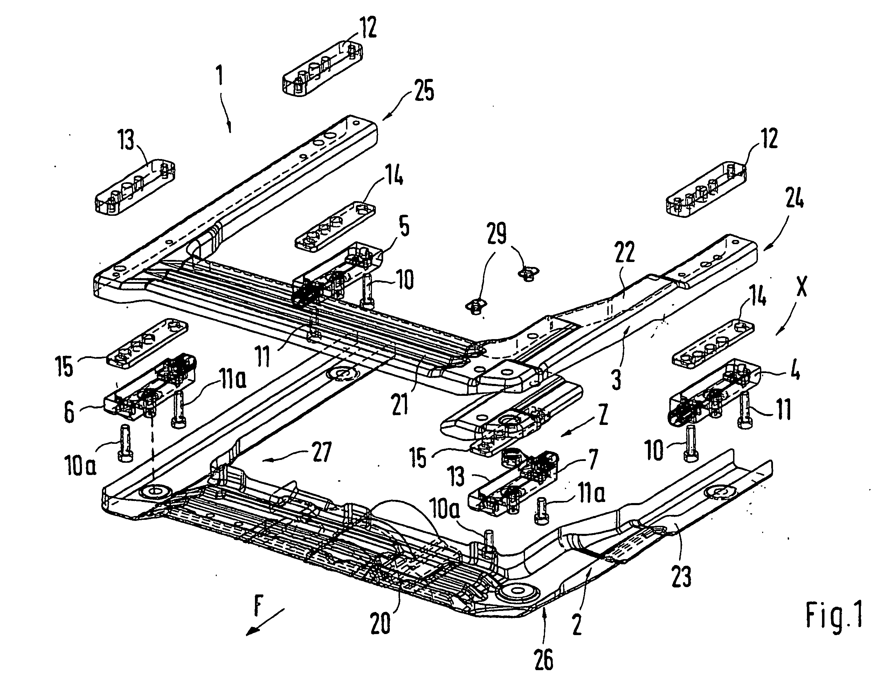

In Fig. 1 ist nur die Sitzkonsole 1 mit Ober- und Unterrahmen 3, 2 näher dargestellt. Mit dem Oberrahmen 3 wird eine nicht dargestellte Sitzschiene verbunden, auf der ein Fahrzeugsitz verschiebbar angeordnet ist. Die Sitzkonsole 1 soll eine möglichst geschützte Anordnung für die Sensoren 4 bis 7 aufweisen, wozu wie Fig. 3 näher zeigt, die U-Profile der Schenkel 22, 23 der Rahmen 2, 3 ineinander verschachtelt sind, so daß die schwimmende Anordnung des Oberrahmens 3 im Unterrahmen 2 nicht behindert wird. Desweiteren sind die freien Enden 24, 25 der Rahmen 2, 3 über eine nicht näher dargestellte Kappe oder dgl. abgeschlossen.

## Patentansprüche

1. Sitzkonsole (1) für einen Fahrzeugsitz, welche am Fahrzeugboden gehalten und mit einer Sitzschiene verbunden ist, auf der der Fahrzeugsitz verschiebbar gelagert ist, wobei die Sitzkonsole (1) einen feststehenden Unterrahmen (2) und einen mit zwischenliegenden Gewichtssensoren (4 bis 7) schwimmend am Unterrahmen (2) gelagerten Oberrahmen (3) umfasst, wobei die Gewichtssensoren (4 bis 7) über Verbindungselemente (12, 13, 29) einerseits fest mit dem Oberrahmen (3) verbunden und andererseits über einen in die jeweiligen Gewichtssensoren (4 bis 7) integrierten Bolzen (8) am Unterrahmen (2) abgestützt sind **dadurch gekennzeichnet, dass** der jeweilige Bolzen (8) mit seinem kopf auf ein Messinstrument im jeweiligen Gewichtssensor (4 bis 7) einwirkt.

2. Sitzkonsole nach Anspruch 1, **dadurch gekennzeichnet, dass** der Ober- und Unterrahmen (3, 2) im Querschnitt jeweils U-profilförmig ausgebildet ist, wobei der Oberrahmen (3) mit seinen Schenkeln (22), die Schenkel (23) des Unterrahmens (2) von außen schwimmend übergreift.

3. Sitzkonsole nach Anspruch 1, **dadurch gekennzeichnet, dass** der Ober- und Unterrahmen (3, 2) im Querschnitt jeweils U-profilförmig ausgebildet ist, wobei der Oberrahmen (3) mit seinem Schenkel (22) in den Unterrahmen (2) eintaucht und die Sensoren (4 bis 7) jeweils von den Schenkeln (22, 23) des Ober- und Unterrahmens (3, 2) umgeben sind.

4. Sitzkonsole nach den Ansprüchen 2 oder 3, **dadurch gekennzeichnet, dass** der Unter- und Oberrahmen (2, 3) eine U-Profilform aufweist, und die Rahmen an ihren freien Enden (24, 25) der Schenkel (23, 22) jeweils einen Sensor (4, 5) aufweisen und die weiteren Sensoren (6, 7) im Übergangsbereich (26, 27) der Schenkel (22, 23) der U-Profilform zum Quersteg (20, 21) der Rahmen angeordnet sind.

5. Sitzkonsole nach den Ansprüchen 1, 2, 3 oder 4, **dadurch gekennzeichnet, dass** zur Erzielung einer parallel zueinander liegenden Anordnung des Oberrahmens (3) zum Unterrahmen (2) zwischen den Sensoren (4 bis 7) und dem Oberrahmen (3) Distanzstücke (14, 15) angeordnet sind.

6. Sitzkonsole nach den Ansprüchen 3, 4 oder 5, **dadurch gekennzeichnet, dass** die in den Schenkeln (22, 23) angeordneten Sensoren (4 bis 7) am Oberrahmen (3) über zwei Gewindebolzen (10, 11) bzw. (10a, 11a) in der oberseitig des Oberrahmens (3) als Verbindungselement ausgebildeten Gewindeplatte (12, 13) verschraubbar sind.

7. Sitzkonsole nach den Ansprüchen 4, 5 oder 6, **dadurch gekennzeichnet, dass** die im Übergangsbereich (26) bzw. (27) vom Schenkel (23) in den Quersteg (20) angeordneten Sensoren (6, 7) mittels der Gewindebolzen (10a, 11a) in im Oberrahmen (3) ortsfestgehaltenen Muttern (29) oder der Gewindeplatte (13) befestigbar sind.

8. Sitzkonsole nach einem der vorhergehenden Ansprüche, **dadurch gekennzeichnet, dass** die Schenkel (22, 23) des Ober- und Unterrahmens (3, 2) an ihren freien Enden (24, 25) über eine Abdeckkappe abgeschlossen sind.

9. Sitzkonsole nach einem der vorhergehenden Ansprüche, **dadurch gekennzeichnet, dass** der Unter- und Oberrahmen (2, 3) aus einer U-Form besteht, und die freien Enden der Schenkel (24, 25) jeweils über einen Quersteg verbunden sind.

## Claims

1. A seat console (1) for a vehicle seat, said seat console being held on the vehicle floor and connected to a seat rail, on which the vehicle seat is displaceably mounted, wherein the seat console (1) comprises a fixed lower frame (2) and an upper frame (3) floatingly mounted on the lower frame (2) with interposed weight sensors (4 to 7), wherein the weight sensors (4 to 7) are on one side fixedly connected to the upper frame (3) by connecting members (12, 13, 29) and on the other side are supported on the lower frame (2) by a bolt integrated into each weight sensor (4 to 7), **characterised in that** the head of the respective bolt (8) acts on a measuring instrument in the respective weight sensor (4 to 7).

2. A seat console according to claim 1, **characterised in that** the upper and lower frames (3, 2) are each U-shaped in cross-section, wherein the arms (22) of the upper frame (3) engage from outside over the arms (23) of the lower frame (2) in a floating arrangement.

3. A seat console according to claim 1, **characterised in that** the upper and lower frames (3, 2) are each U-shaped in cross-section, wherein the arm (22) of the upper frame (3) extends into the lower frame (2), and the sensors (4 to 7) are each surrounded by the arms (22, 23) of the upper and lower frames (3, 2).

4. A seat console according to claim 2 or 3, **characterised in that** the lower and upper frames (2, 3) are in the form of a U-section, and the frames each have a sensor (4, 5) at the free ends (24, 25) of their arms (23, 22), and the further sensors (6, 7) are arranged in the transition region (26, 27) between the arms (22, 23) of the U-section and the crosspiece (20, 21) of the frames.

5. A seat console according to claim 1, 2, 3 or 4, **characterised in that** spacers (14, 15) are arranged between the sensors (4 to 7) and the upper frame (3) in order to achieve a mutually parallel arrangement of the upper frame (3) and the lower frame (2).

6. A seat console according to claim 3, 4 or 5, **characterised in that** the sensors (4 to 7), arranged in the arms (22, 23), can be screwed to the upper frame (3) by two threaded bolts (10, 11) or (10a, 11a) in the threaded plate (12, 13) formed as a connecting member on the upper surface of the upper frame (3).

7. A seat console according to claim 4, 5 or 6, **characterised in that** the sensors (6, 7), which are arranged in the transition region (26) or (27) between the arm (23) and the crosspiece (20), are securable by means of the threaded bolts (10a, 11a) in nuts (29), which are fixedly held in the upper frame (3), or in the threaded plate (13).

8. A seat console according to any one of the preceding claims, **characterised in that** the arms (22, 23) of the upper and lower frames (3, 2) are closed at their free ends (24, 25) by a covering cap.

9. A seat console according to any one of the preceding claims, **characterised in that** the lower and upper frames (2, 3) are U-shaped, and the free ends of the arms (24, 25) are connected by a respective crosspiece.

## Revendications

1. Soubassement de siège (1) pour un siège de véhicule, qui est maintenu sur le plancher du véhicule et est relié à une glissière de siège sur laquelle le siège du véhicule est monté de manière à pouvoir coulisser, le soubassement de siège (1) comprenant un cadre inférieur (2) fixe et un cadre supérieur (3) monté flottant sur le cadre inférieur (2) avec des capteurs de poids (4 à 7) intercalés, les capteurs de poids (4 à 7) étant reliés d'une part fixement au cadre supérieur (3) par des éléments de liaison (12, 13, 29) et étant soutenus d'autre part sur le cadre inférieur (2) par un axe (8) intégré dans les capteurs de poids (4 à 7) respectifs, **caractérisée en ce que** chaque axe (8) agit par sa tête sur un instrument de mesure dans le capteur de poids (4 à 7) respectif.

2. Soubassement de siège selon la revendication 1, **caractérisé en ce que** le cadre supérieur et le cadre inférieur (3, 2) présentent une section transversale profilée en U, le cadre supérieur (3) passant de manière flottante de l'extérieur par ses côtés (22) sur les côtés (23) du cadre inférieur (2).

3. Soubassement de siège selon la revendication 1, **caractérisé en ce que** le cadre supérieur et le cadre inférieur (3, 2) présentent une section transversale profilée en U, le cadre supérieur (3) pénétrant par son côté (22) dans le cadre inférieur (2) et les capteurs (4 à 7) étant entourés chacun par les côtés (22, 23) du cadre supérieur et du cadre inférieur (3, 2).

4. Soubassement de siège selon la revendication 2 ou 3, **caractérisé en ce que** le cadre inférieur et le cadre supérieur (2, 3) présentent une forme profilée en U, et les cadres présentent à chacune de leurs extrémités libres (24, 25) des côtés (23, 22) un capteur (4, 5), et les autres capteurs (6, 7) sont disposés dans la zone de transition (26, 27) entre les côtés (22, 23) de la forme profilée en U et la traverse (20, 21) des cadres.

5. Soubassement de siège selon les revendications 1, 2, 3 ou 4, **caractérisé en ce que** pour obtenir une disposition parallèle du cadre supérieur (3) et du cadre inférieur (2), des écarteurs (14, 15) sont disposés entre les capteurs (4 à 7) et le cadre supérieur (3).

6. Soubassement de siège selon les revendications 3, 4 ou 5, **caractérisée en ce que** les capteurs (4 à 7), disposés dans les côtés (22, 23), peuvent être vissés sur le cadre supérieur (3) par deux boulons filetés (10, 11) ou (10a, 11a) dans la plaque taraudée (12, 13) réalisée comme élément de liaison.

7. Soubassement de siège selon les revendications 4, 5 ou 6, **caractérisé en ce que** les capteurs (6, 7), disposés dans la zone de transition (26 ou 27) entre le côté (23) et la traverse (20), peuvent être fixés au moyen des boulons filetés (10a, 11a) dans des écrous (29) maintenus en un emplacement fixe dans le cadre supérieur (3), ou dans la plaque taraudée (13).

8. Soubassement de siège selon l'une des revendications précédentes, **caractérisé en ce que** les côtés (22, 23) du cadre supérieur et du cadre inférieur (3, 2) sont fermés à leurs extrémités libres (24, 25) par un capuchon de fermeture.

9. Soubassement de siège selon l'une des revendications précédentes, **caractérisé en ce que** le cadre inférieur et le cadre supérieur (2, 3) présentent une forme en U, et les extrémités libres des côtés (24, 25) sont reliées chacune par une traverse.
